# EUROPÄISCHE PATENTSCHRIFT

(11) **EP 0 588 273 B1**
(45) Veröffentlichungstag und Bekanntmachung des Hinweises auf die Patenterteilung: **06.08.1997**
(21) Anmeldenummer: 93114649.2
(22) Anmeldetag: 13.09.1993
(51) Int. Cl.: H05B 39/04, H05B 39/08, H05B 39/02, H02M 5/293, H02M 5/257

(54) **Verfahren zum elektronischen Dimmen und Dimmer zur Durchführung des Verfahrens**
Process for electronically dimming and dimmer for carrying out this process
Procédé pour varier l'intensité lumineuse et dimmer pour mettre en oeuvre ce procédé

(30) Priorität: 17.09.1992 DE 4231060
(43) Veröffentlichungstag der Anmeldung: 23.03.1994
(73) Patentinhaber: ABB PATENT GmbH, 68309 Mannheim (DE)
(72) Erfinder: Rosch, Rainer, Dr., D-5880 Lüdenscheid (DE); Zapp, Robert, D-5885 Schalksmühle (DE); Goldyn, Dirk, D-58454 Witten (DE)
(74) Vertreter: Rupprecht, Klaus, Dipl.-Ing.

(56) Entgegenhaltungen:
- EP-A- 0 375 289
- EP-A- 0 515 961
- WO-A-92/01968
- WO-A-92/09943
- WO-A-92/15052
- DE-C- 4 002 485
- DE-U- 9 109 915
- GB-A- 2 146 499
- GB-A- 2 173 961

## Beschreibung

Die Erfindung betrifft ein Verfahren nach dem Oberbegriff des Anspruchs 1 und eine Vorrichtung nach dem Oberbegriff des Anspruchs 10.

Besonders in Verbindung mit Beleuchtungseinrichtungen zum Einstellen der Beleuchtungsstärke finden Dimmer ein breites Einsatzfeld, zumal sich ihre Anschaffung durch einen umweltfreundlichen Stromspareffekt in der Regel schnell amortisiert. Es ist z. B. aus der EP-A 0 515 961 bekannt, einen Dimmer mit elektronischen Bauelementen aufzubauen und einen als Schaltglied wirkenden Halbleiter mit Hilfe einer Steuerschaltung nach dem Phasenan- oder Phasenabschnittprinzip, synchron zur Netzfrequenz, nur während eines durch den Stromflußwinkel bestimmten Bruchteils der Dauer einer Periode oder Halbwelle einzuschalten. Die Vorgabe des Stromflußwinkels und die dementsprechende Herabsetzung des Laststroms erfolgt im allgemeinen mit Hilfe eines Potentiometers.

In der WO-A-9 215 052 wird eine phasengesteuerte Leistungssteuereinheit beschrieben, bei der die Art der Phasensteuerung von Phasenanschnitt auf Phasenabschnitt umgeschaltet werden kann. Außerdem werden bedrohliche Zustände wie z. B. eine Überhitzung erfaßt und abgestellt. Auch in der DE-U-9 109 915 ist eine Dimmerschaltung beschrieben, bei der ein Phasenanschnitt erfolgt und beim Einschalten immer der zuletzt gespeicherte Dimmerzustand eingenommen wird. Aus der GB-A-2 146 499 ist es bekannt, einen phasengesteuerten Leistungsschalter abzuschalten, wenn der Laststrom einen vorgegebenen Maximalwert überschreitet. Eine Schutzeinrichtung, in die eine Dimmersteuerung eingebaut ist, beschreibt DE-C-40 02 485. Die Schutzeinrichtung dient zum Absichern von Niederspannungsbeleuchtungssystemen. Schließlich ist auch in der älteren Anmeldung WO-A1-94/00 965 ein Dimmer mit einem Mikroprozessor erläutert. Hier werden unter anderem von einem Temperaturfühler abgegebene Signale in die Steuerschaltung rückgekoppelt.

Aufgabe der Erfindung ist es, ein Verfahren nach dem Oberbegriff des Anspruchs 1 und einen Dimmer nach dem Oberbegriff des Anspruchs 10 so zu verbessern, daß bestimmte Störungen vermieden werden und/oder periphere Einflüsse, die zu einer Fehleinstellung oder Beschädigung des Dimmers führen könnten, in ihrer Wirkung ausgeschaltet werden.

Diese Aufgabe wird durch die in den Ansprüchen 1 und 10 gekennzeichneten Merkmale gelöst. Zweckmäßige Ausgestaltungen und Weiterbildungen des Erfindungsgegenstandes sind in den Unteransprüchen genannt.

Erfindungsgemäß wird im wesentlichen durch eine von der Steuerschaltung selbständig ausgelöste, zumindest kurzzeitig wirkende Veränderung des durch das Bedienelement vorgegebenen Stromflußwinkels der jeweils störende Effekt beseitigt. So gelingt es, zu niedrige Versorgungspannungen am Dimmer in einem relativ breiten Bereich über den Stromflußwinkel auszuregeln. Beim Unterschreiten eines Mindestwertes erfolgt ein Abschalten der Last. Hierdurch wird auch eine Vorgabe falscher Dimmstellungen vermieden.

Ein zu beseitigender störender Effekt ist die starke Belastung von Beleuchtungseinrichtungen bei einem schlagartigen Einschalten der Netzspannung. Durch einen "Softstart", mit einem sich nach dem Einschalten sanft erhöhenden Stromflußwinkel, wird ein deutlicher Anstieg der Lebensdauer der gedimmten Lampen erreicht. Eine Begrenzung der Flankensteilheit verhindert unzulässige Funkstörspannungen.

Mit Hilfe einer Temperaturüberwachung des Chips, einer Überwachung des Laststroms und einer Erfassung von Überspannungen gelingt es, unzulässige Werte zu vermeiden und damit den Dimmer zu schützen.

Durch die Integration des Niedervoltteils und des Leistungstransistors auf einem gemeinsamen Chip und durch einen geschickten Schaltungsaufbau gelingt es, eine Baueinheit mit sehr geringem Platzbedarf, mit einer guten Ankopplung an Kühlelemente und mit einer kleinen Anzahl mit dem Chip zu verbindenden externen Bauteilen zu schaffen. Dementsprechend kann bei Großserien auch der Fertigungsaufwand stark reduziert werden.

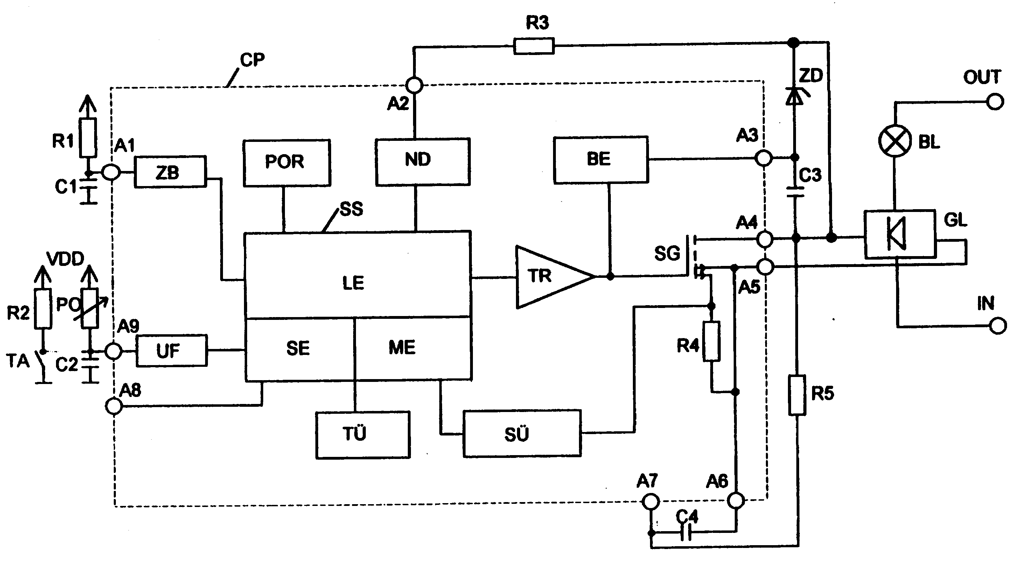

Ein Ausführungsbeispiel der Erfindung ist in der aus einer einzigen Figur bestehenden Zeichnung dargestellt und wird im folgenden näher beschrieben. Wie aus dem Blockschaltbild ersichtlich, besteht der Dimmer im wesentlichen aus einem Chip CP mit Anschlüssen Al bis A9 zum externen Anschließen einiger weiterer passiver elektrischer Bauelemente. Auf dem gemeinsamen Chip CP ist ein als Schaltglied SG wirkender VDMOS-Leistungstransistor zusammen mit einem Niedervolt-CMOS-Teil integriert, der eine komplette Ansteuer- und Überwachungselektronik enthält. Der Leistungstransistor ist durch eine dünne vergrabene Oxidschicht gegenüber dem Niedervoltteil isoliert.

Der Niedervoltteil wird durch eine Steuerschaltung SS beherrscht, die eine Logikeinheit LE, eine Softstarteinheit SE und eine Memoryeinheit ME umfaßt, und die mit einer Zeitbasis ZB arbeitet, deren Frequenz durch ein aus einem ersten Widerstand R1 und einem ersten Kondensator C1 bestehenden externen RC-Glied bestimmt wird, das mit der Zeitbasis ZB über einen ersten Anschluß Al des Chips verbunden ist.

Die Vorgabe des die Dimmstellung des Dimmers bestimmenden Stromflußwinkels kann wahlweise entweder über ein extern zugeschaltetes Potentiometer PO oder einen externen Taster TA erfolgen. Bei einer Bedienung über das Potentiometer liegt dieses mit seinem einen Ende an einer Spannung VDD und mit seinem anderen Ende sowohl an einem neunten Anschluß A9 des Chips CP als auch über einen zweiten Kondensator C2 an Nullpotential. Bei einer Bedienung über den Taster verbindet dieser im geschlossenen Zustand den neunten Anschluß A9, der seinerseits über einen als Vorwiderstand wirkenden zweiten Widerstand R2 an der Spannung VDD liegt, mit Nullpotential.

Auf einen achten Anschluß A8 wird je nach Art des Bedienelementes ein Low- oder High-Signal gegeben, so daß die Steuerschaltung zwischen Potentiometer- und Tasterbetrieb unterscheiden kann.

Die von einer als "Power on reset" wirkenden Stromversorgung POR gespeiste Steuerschaltung SS arbeitet mit einer Temperaturüberwachung TÜ, einer Stromüberwachung SÜ und einem Nulldurchgangsdetektor ND zusammen, und steuert über einen Treiber TR das Steuerglied SG nach Maßgabe des Bedienelementes PO oder TA mit zusätzlichen Werten, die die Steuerschaltung SS mit Hilfe der weiteren Funktionseinheiten ermittelt.

Das Schaltglied SG liegt mit seiner Schaltstrecke zwischen dem dritten und vierten Anschluß des Chips CP und damit zwischen den Augängen eines als Brückenschaltung aufgebauten Gleichrichters GL, der seinerseits mit seinen Wechselspannungseingängen in Reihe mit einer Beleuchtungseinrichtung BL und den Anschlüssen IN und OUT eines Wechselspannungsnetzes angeordnet ist.

Ein als Zenerdiode ZD ausgeführtes, extern angeschlossenes, spannungsbegrenzendes Bauelement dient dazu, am Schaltglied SG momentan auftretende Überspannungen zu erfassen. Das hierdurch erzeugte Signal wird über einen dritten Anschluß A3 des Chips CP einer Begrenzungseinheit BE zugeführt, die dafür sorgt, daß das Schaltglied SG, unabhängig von dem über den Treiber TR geleiteten Signal der Steuerschaltung SS, während der Dauer der Überspannung eingeschaltet wird, und damit die Überspannung quasi kurzschließt.

Außer zur Überspannungsbegrenzung dient die Begrenzungseinheit BE noch mit Hilfe eines extern, parallel zur Zenerdiode ZD angeschlossenen dritten Kondensators C3 auch als Flankensteilheitsbegrenzung. Dabei wirkt die Begrenzungseinheit BE auf das dem Gate des VDMOS-Leistungstransistors von der Steuerschaltung SS über den Treiber TR zugeführte Steuersignal so ein, daß die Schaltflanken keine unzulässigen Störspannungen verursachen.

Ein sechster Anschluß A6 ist mit dem fünften Anschluß A5 verbunden, wobei beide an einem Hauptabgriff des Source-Anschlusses des Leistungstransistors liegen. Ein fünfter Widerstand R5 verbindet den vierten Anschluß A4 mit einem siebten Anschluß A7, der über einen als Spannungspuffer wirkenden vierten Kondensator C4 mit dem sechsten Anschluß A6 verbunden ist.

Die Schaltung soll zum Dimmen komplexer Lasten, wie sie beispielsweise bei Niedervolt Halogenlampen mit einem vorgeschalteten elektronischen Transformator auftreten, geeignet sein und arbeitet deshalb mit einem Phasenabschnitt. Es ist ein Stellbereich von 2,2ms bis 8,0ms vorgesehen, wobei der verbleibende Restphasenabschnitt für die Stromversorgung POR benötigt wird.

Aus der Oszillatorfrequenz der Zeitbasis ZB wird eine Zeitsperre erzeugt, die den Nulldurchgangsdetektor ND nach ca. 8,7ms freigibt. Ein gültiger Nulldurchgang aktiviert die Schaltstufe und setzt die Zeitbasis ZB zurück. Der Zeitpunkt des Phasenabschnitts wird durch einen Vergleich der Zeitbasis mit einem digital dargestellten Vergleichswert erzeugt. Eine Synchronisation des Nulldurchgangsdetektors ND erfolgt über einen externen dritten Widerstand R3, der einen zweiten Anschluß A2 des Chips CP mit dem am positiven Ausgang des Gleichrichters GL liegenden vierten Anschluß A4 verbindet.

Die Memoryeinheit sorgt dafür, daß ein über den Taster TA vorgegebener Stellwert des Dimmers nach einem Abschalten der Last, also z.B. dem Ausschalten der Beleuchtungseinrichtung BL, bei deren Wiedereinschalten für die Steuerschaltung als Vorgabewert zur Verfügung steht. Bei einer Potentiometerbedienung bleibt der zuletzt eingestellte Wert auch ohne Wirksamwerden der Memoryeinheit ME durch die Potentiometerstellung als Vorgabewert erhalten.

Ein am neunten Anschluß A9 liegender Umformer UF arbeitet bei Potentiometerbedienung mit der Steuerschaltung SS so zusammen, daß eine von der Stellung des Potentiometers PO abhängige Ladezeit des zweiten Kondensators C2 in ein Signal umgeformt wird, das die Steuerschaltung SS zu einem Zählerstand verarbeiten kann, der wiederum den Stromflußwinkel bestimmt.Bei Tasterbedienungwird mit Hilfe des Umformers UF während des Einschaltzustandes eine Information für die Logikeinheit erzeugt, welche einen entsprechenden Zählerstand und den dazugehörigen Stromflußwinkel einstellt.

Von wesentlicher Bedeutung für die Lebensdauer der Beleuchtungseinrichtung BL ist die Softstarteinheit SE, die nach dem Einschalten einen sanften Anstieg des Stromfluß winkels ermöglicht. Sie arbeitet mit einem nicht dargestellten Zähler der Logikeinheit LE so zusammen, daß dieser seinen Zählerstand von Netzhalbwelle zu Netzhalbwelle solange erhöht, bis ein Stromflußwinkel erreicht ist, der durch den Taster TA oder das Potentiometer PO eingestellt wurde oder durch andere Vorgaben der Steuereinheit SS bestimmt wird.

Die mit der Steuereinheit SS zusammenarbeitende Temperaturüberwachung TÜ dient dazu, die Temperatur des Chips CP und damit des Schaltgliedes SG und der übrigen mit der Steuerschaltung korrespondierenden Funktionseinheiten des Niedervoltteils, zu erfassen und deren Wert an die Steuerschaltung SS weiterzugeben. Die Steuerschaltung SS regelt ihrerseits den Stomflußwinkel über den Zählerstand so, daß die Temperatur des Chips CP in einem zulässigen Bereich bleibt.

Weiterhin arbeitet die Steuerschaltung SS mit der Stromüberwachung SÜ zusammen, die einen zum Laststrom proportionalen Spannungsabfall an einem als Shunt wirkenden vierten Widerstand R4 erfaßt und an die Steuerschaltung SS weitergibt. Bei unzuläsigem Laststrom, im allgemeinen dem zweifachen Nennstrom, unterbricht die Steuerschaltung SS die Ansteuerung des Schaltgliedes SG über einen Treiber TR und verhindert eine Neuansteuerung mindestens bis zum nächsten Nulldurchgang der Wechselspannung.

Um Fehleinstellungen des Dimmers bei Unterspannung zu vermeiden, ist die Logikeinheit LE mit einer nicht dargestellten Vergleichslogik ausgestattet, die den Wert der Versorgungsspannung überwacht und beim Unterschreiten eines vorgegebenen ersten Grenzwertes, den Stromflußwinkel über den Zählerstand soweit reduziert, bis die Versorgungsspannung in einen für das Schaltglied SG günstigen Bereich zurückkehrt. Weiterhin ist die Logikeinheit LE so programmiert, daß sie bei einem Unterschreiten eines vorgegebenen niedrigeren zweiten Grenzwertes der Versorgungsspannung ein Reset auslöst, durch das alle aktuellen Vorgaben gelöscht werden. Das bedeutet, daß der Zählerstand dem eines ausgeschalteten Dimmers entspricht und der Memorywert auf maximale Helligkeit eingestellt ist.

Um ein leichtes Flackern der Beleuchtungseinrichtung z.B. bei Netzspannungsschwankungen zu vermeiden, ist die Steuerschaltung so aufgebaut, daß sich Änderungen des Stromflußwinkels bei jedem Bedienvorgang erst auswirken, wenn sich der zugehörige Zählerstand um mindestens zwei Stufen ändert.

## Patentansprüche

1. Verfahren zum elektronischen Dimmen von Lasten (BL), insbesondere von Beleuchtungseinrichtungen, mit Hilfe eines durch eine Steuerschaltung (SS) nach dem Phasenanschnitt- oder Phasenabschnittprinzip gesteuerten, im Lastkreis liegenden Schaltgliedes (SG), dessen Einschaltdauer pro Periode der die Last (BL) speisenden Wechselspannung, nach Vorgabe durch ein Bedienelement (PO,TA), entsprechend einem variablen Stromflußwinkel durch die Steuerschaltung (SS) bestimmt wird, und daß die Steuerschaltung (SS) beim Bestimmen des Stromflußwinkels, neben dem durch das Bedienelement (PO,TA) vorgegebenen Wert, weitere selbsttätig ermittelte Werte derart berücksichtigt, daß sie zumindest während einer Übergangszeit Stromflußwinkel einstellt, die von der Vorgabe durch das Bedienelement (PO,TA) gezielt abweichen,
dadurch gekennzeichnet, daß die Steuerschaltung (SS) bei ihrer Stromversorgung auftretende Unterspannungen erfaßt und den Stromflußwinkel soweit regelt, bis durch einen ausreichenden Anstieg des Restphasenanschitts oder Restphasenabschnitts wieder ein ausreichender Spannungswert erreicht ist, und sie danach den Stromflußwinkel schrittweise wieder erhöht, und daß die Steuerschaltung (SS) bei der Vorgabe des Stromflußwinkels mit einer Hysterese arbeitet, derart, daß Stromflußwinkeländerungen einen Mindestwert überschreiten müssen, um von der Steuerschaltung (SS) berücksichtigt zu werden.

2. Verfahren nach Anspruch 1, dadurch gekennzeichnet, daß die Steuerschaltung (SS), ausgehend vom Zeitpunkt des Einschaltens der Last (BL), den Stromflußwinkel bei Null oder einem kleinen Wert beginnend mit vorgegebener Änderungsgeschwindigkeit solange erhöht, bis der durch das Bedienelement (PO,TA) vorgegebene Wert erreicht ist.

3. Verfahren nach Anspruch 1 oder 2, dadurch gekennzeichnet, daß die Steuerschaltung (SS) den jeweils zuletzt eingestellten Stromflußwinkel als Memorywert speichert und nach einem Abschalten der Last (BL) oder einem kurzzeitigem Netzausfall wieder diesen Stromflußwinkel einstellt.

4. Verfahren nach einem der vorhergehenden Ansprüche, dadurch gekennzeichnet, daß die Steuerschaltung (SS) die Temperatur des Schaltgliedes (SG) erfaßt und bei Übertemperatur dieses sofort durchschaltet und damit den Stromflußwinkel zunächst verkleinert und bei den folgenden Halbwellen den Stromflußwinkel so regelt, daß sich ein zulässiger Temperaturbereich einstellt.

5. Verfahren nach einem der vorhergehenden Ansprüche, dadurch gekennzeichnet, daß das Schaltglied (SG) bei unzulässigem Überstrom sofort für den Rest der Netzhalbwelle abgeschaltet wird.

6. Verfahren nach Anspruch 1, dadurch gekennzeichnet, daß die Steuerschaltung (SS) bei Unterschreiten eines Mindestwertes der Versorgungsspannung den Stromflußwinkel auf Null setzt und damit den Laststromkreis unterbricht und erst nach Überschreiten eines vorgegebenen Grenzwertes diesen wieder einschaltet.

7. Verfahren nach einem der vorhergehenden Ansprüche, dadurch gekennzeichnet, daß die Steuerschaltung (SS) bei einer am Schaltglied (SG) anstehenden Überspannung das Schaltglied (SG) durchsteuert, solange die Überspannung ansteht und dadurch den Stromflußwinkel insgesamt entsprechend erhöht.

8. Verfahren nach einem der vorhergehenden Ansprüche, dadurch gekennzeichnet, daß bei der Vorgabe des Stromflußwinkels durch das Bedienelement (PO,TA), die Steuerschaltung zwischen einem analog wirkenden Bedienelement (PO), insbesondere einem Potentiometer, und einem digital wirkenden Bedienelement (TA), insbesondere einem Taster, unterscheiden kann.

9. Verfahren nach einem der vorhergehenden Ansprüche, dadurch gekennzeichnet, daß die Steuerschaltung (SS) die Flankensteilheit der zur Ansteuerung des Schaltgliedes (SG) benötigten Steuerimpulse begrenzt.

10. Dimmer zur Durchführung des Verfahrens nach einem der vorhergehenden Ansprüche, mit einem in Reihe zur Last (BL) liegenden Schaltglied (SG), vorzugsweise einem VDMOS-Leistungstransistor, einer das Schaltglied (SG) steuernden Steuerschaltung (SS), einer als "Power on reset" ausgebildeten Stromversorgung (POR), einem Nulldurchgangsdetektor (ND) zur Synchronisation der Steuerimpulse der Steuerschaltung (SS), einem Bedienelement (PO;TA) zur Vorgabe eines die Dimmstellung bestimmenden Stromflußwinkels, und einer zur Steuerschaltung (SS) gehörigen Logikeinheit (LE), die so programmiert ist, daß sie weitere, nicht über das Bedienelement (PO;TA) vorgegebene Betriebswerte selbsttätig erfaßt und nach deren Auswertung den vorgegebenen Stromflußwinkel zumindest zeitweise entsprechend ändert, und einer ebenfalls zur Steuerschaltung (SS) gehörigen Memoryeinheit (ME) zur Speicherung des mit dem Bedienelement (PO;TA) zuletzt eingestellten Stromflußwinkels als Memorywert, dadurch gekennzeichnet, daß die Logikeinheit (LE) mit einer Vergleichslogik ausgestattet ist, die den Wert der Versorgugsspannug bezüglich Unterspannung überwacht und beim Unterschreiten eines vorgegebenen ersten Grenzwertes den Stromflußwinkel über einen Zählerstand soweit reduziert, bis die Versorgungsspannung in einen für das Schaltglied (SG) günstigen Bereich zurückkehrt, und daß die Steuerschaltung (SS) so aufgebaut ist, daß sich Änderungen des Stromflußwinkels bei jedem Bedienvorgang erst auswirken, wenn sich der zugehörige Zählerstand um mindestens zwei Stufen ändert.

11. Dimmer nach Anspruch 11, dadurch gekennzeichnet, daß die Logikeinheit (LE) so programmiert ist, daß sie bei einem Unterschreiten eines vorgegebenen niedrigeren zweiten Grenzwertes der Versorgungsspannung ein Reset auslöst, durch das alle aktuellen Vorgaben gelöscht werden, was bedeutet, daß der Zählerstand dem eines ausgeschalteten Dimmers entspricht und der Memorywert auf maximale Helligkeit eingestellt ist.

12. Dimmer nach einem der Ansprüche 10 oder 11, dadurch gekennzeichnet, daß die Steuerschaltung (SS) eine Softstarteinheit (SE) beinhaltet, die mit einem Zähler der Logikeinheit (LE) so zusammenarbeitet, daß dieser seinen Zählerstand von Netzhalbwelle zu Netzhalbwelle sukzessive erhöht, bis ein Stromflußwinkel erreicht ist, der durch das Bedienelement (PO;TA) eingestellt oder durch andere Vorgaben der Steuerschaltung (SS) bestimmt ist.

13. Dimmer nach einem der Ansprüche 10 bis 12, dadurch gekennzeichnet, daß die Steuerschaltung (SS) mit einer Temperaturüberwachung (TÜ) zusammenarbeitet, die die Temperatur des das Schaltglied (SG) aufnehmenden Chips (CP) erfaßt und deren Wert an die Steuerschaltung (SS) weitergibt, die ihrerseits den Stomflußwinkel über den Zählerstand so regelt, daß die Temperatur des Chips (CP) in einem zulässigen Bereich bleibt.

14. Dimmer nach einem der Ansprüche 10 bis 13, dadurch gekennzeichnet, daß die Steuerschaltung (SS) mit einer Stromüberwachung (SÜ) zusammenarbeitet, die einen zum Laststrom proportionalen Spannungsabfall erfaßt und an die Steuerschaltung (SS) weitergibt, die ihrerseits bei unzulässigem Laststrom die Ansteuerung des Schaltgliedes (SG) über einen Treiber (TR) unterbricht und eine Neuansteuerung mindestens bis zum nächsten Nulldurchgang der Wechselspannung verhindert.

15. Dimmer nach einem der Ansprüche 10 bis 14, dadurch gekennzeichnet, daß eine am Schaltglied (SG) anliegende Überspannung über ein spannungsbegrenzendes Bauelement (ZD) ein Signal erzeugt, das über eine Begrenzungseinheit (BE) so auf das Schaltglied (SG) einwirkt, daß dieses für die Dauer der anstehenden Überspannung durchgeschaltet ist.

16. Dimmer nach einem der Ansprüche 10 bis 15, dadurch gekennzeichnet, daß die Steuerschaltung (SS) mit einem Umformer (UF) zusammenarbeitet, der bei Verwendung eines Potentiometers (PO) als Bedienelement eine von der Stellung des Potentiometers (PO) abhängige Ladezeit eines zweiten Kondensators (C2) in ein Signal umformt, das die Steuerschaltung (SS) zu einem Zählerstand umformt, der den Stromflußwinkel bestimmt.

17. Dimmer nach einem der Ansprüche 10 bis 16, dadurch gekennzeichnet, daß die Steuerschaltung (SS) mit einem Umformer (UF) zusammenarbeitet, der bei Verwendung eines Tasters (TA) als Bedienelement, während des Einschaltzustandes eine Information für die Logikeinheit (LE) erzeugt, welche einen entsprechenden Zählerstand und den dazugehörigen Stromflußwinkel einstellt.

18. Dimmer nach einem der Ansprüche 10 bis 17, dadurch gekennzeichnet, daß ein dritter Kondensator (C3) vorgesehen ist, der über die Begrenzungseinheit (BE) auf das vom Treiber (TR) kommende Signal derart einwirkt, daß die Schaltflanken des Laststromes keine unzulässigen Funkstörspannungen erzeugen.

19. Dimmer nach einem der Ansprüche 10 bis 18, dadurch gekennzeichnet, daß ein im wesentlichen die Steuerschaltung (SS) und weitere Funktionseinheiten (ZB;UF;TÜ;SÜ;TR) umfassender Niedervolt-CMOS-Teil mit dem als VDMOS-Leistungstransistor ausgebildeten Schaltglied (SG) auf einem gemeinsamen Chip (CP) integriert ist und der Niedervoltteil von dem Drain des Leistungstransistors durch eine ca. 0,3um starke vergrabene Oxidschicht isoliert ist.

## Claims

1. Process for electronically dimming loads (BL), in particular lighting devices, with the aid of a switching element (SG) which is controlled by a control circuit (SS) according to the phase-gating principle or phase-chopping principle, is situated in the load circuit and whose turned-on duration per period of the alternating voltage feeding the load (BL), after predetermination by an operating element (PO,TA), is determined in accordance with a variable angle of flow by the control circuit (SS), the control circuit (SS), during the determination of the angle of flow, taking into account, in addition to the value predetermined by the operating element (PO,TA), further automatically determined values in such a way that it sets, at least during a transition time, angles of flow which purposefully deviate from the predetermination by the operating element (PO,TA), characterized in that the control circuit (SS) detects undervoltages occurring in its power supply and regulates the angle of flow until a sufficient voltage value is reached again by virtue of a sufficient rise in the residual phase-gated section or residual phase-chopped section, and afterwards it increases the angle of flow again in steps, and in that the control circuit (SS) operates with hysteresis during the predetermination of the angle of flow, in such a way that changes in the angle of flow must exceed a minimum value in order to be taken into account by the control circuit (SS).

2. Process according to Claim 1, characterized in that the control circuit (SS), starting at the instant when the load (BL) is switched on, increases the angle of flow, starting at zero or a small value, at a predetermined rate of change until the value predetermined by the operating element (PO,TA) is reached.

3. Process according to Claim 1 or 2, characterized in that the control circuit (SS) stores the angle of flow set last in each case as a memory value, and sets this angle of flow again after the load (BL) has been switched off or after a momentary mains failure.

4. Process according to one of the preceding claims, characterized in that the control circuit (SS) acquires the temperature of the switching element (SG) and, in the event of an overtemperature, immediately activates the said switching element and thus initially reduces the angle of flow and, during the following half-cycles, regulates the angle of flow in such a way that a permissible temperature range is established.

5. Process according to one of the preceding claims, characterized in that, in the event of an impermissible overcurrent, the switching element (SG) is immediately turned off for the remainder of the mains half-cycle.

6. Process according to Claim 1, characterized in that when the supply voltage falls below a minimum value, the control circuit (SS) sets the angle of flow to zero and thus interrupts the load circuit and switches the latter back on only after a predetermined limit value is exceeded.

7. Process according to one of the preceding claims, characterized in that when an overvoltage is present at the switching element (SG), the control circuit (SS) drives the switching element (SG) for as long as the overvoltage is present and, as a result, correspondingly increases the overall angle of flow.

8. Process according to one of the preceding claims, characterized in that, during the predetermination of the angle of flow by the operating element (PO,TA), the control circuit can distinguish between an operating element (PO) acting in an analog manner, in particular a potentiometer, and an operating element (TA) acting in a digital manner, in particular a pushbutton switch.

9. Process according to one of the preceding claims, characterized in that the control circuit (SS) limits the edge steepness of the control pulses required for driving the switching element (SG).

10. Dimmer for carrying out the process according to one of the preceding claims, having a switching element (SG), preferably a VDMOS power transistor, which is connected in series with the load (BL), a control circuit (SS) which controls the switching element (SG), a power supply (POR) which is designed as "Power on reset", a zero-crossing detector (ND) for the synchronization of the control pulses of the control circuit (SS), an operating element (PO;TA) for predetermining an angle of flow which determines the dimmed setting, and a logic unit (LE) which belongs to the control circuit (SS) and is programmed in such a way that it automatically acquires further operating values which are not predetermined by means of the operating element (PO;TA), and, following evaluation of the said operating values, correspondingly changes the predetermined angle of flow at least at times, and a memory unit (ME) which likewise belongs to the control circuit (SS) and serves to store the angle of flow which was set last by means of the operating element (PO;TA) as a memory value, characterized in that the logic unit (LE) is equipped with a comparison logic arrangement which monitors the value of the supply voltage as regards undervoltage and, when a predetermined first limit value is downwardly transgressed, reduces the angle of flow by way of a counter reading until the supply voltage returns to a range which is favourable for the switching element (SG), and in that the control circuit (SS) is constructed in such a way that changes in the angle of flow during each operating procedure take effect only when the associated counter reading changes by at least two steps.

11. Dimmer according to Claim 11, characterized in that the logic unit (LE) is programmed in such a way that it triggers a reset when the supply voltage falls below a predetermined lower, second limit value, as a result of which reset all of the present predeterminations are erased, which means that the counter reading corresponds to that of a switched-off dimmer and the memory value is set to maximum brightness.

12. Dimmer according to either of Claims 10 and 11, characterized in that the control circuit (SS) comprises a soft start unit (SE) which cooperates with a counter of the logic unit (LE) in such a way that this counter progressively increases its counter reading from mains half-cycle to mains half-cycle until an angle of flow is reached which is set by the operating element (PO;TA) or is determined by other predeterminations of the control circuit (SS).

13. Dimmer according to one of Claims 10 to 12, characterized in that the control circuit (SS) cooperates with a temperature monitoring arrangement (TÜ) which detects the temperature of the chip (CP) accommodating the switching element (SG) and forwards the value of the said temperature to the control circuit (SS), which, for its part, regulates the angle of flow by way of the counter reading in such a way that the temperature of the chip (CP) remains in a permissible range.

14. Dimmer according to one of Claims 10 to 13, characterized in that the control circuit (SS) cooperates with a current monitoring arrangement (SÜ) which detects a voltage drop proportional to the load current and forwards it to the control circuit (SS), which, for its part, in the event of impermissible load current, interrupts the driving of the switching element (SG) via a driver (TR) and prevents renewed driving at least until the next zero crossing of the alternating voltage.

15. Dimmer according to one of Claims 10 to 14, characterized in that an overvoltage present at the switching element (SG) generates, via a voltage-limiting component (ZD), a signal which acts via a limiting unit (BE) on the switching element (SG) in such a way that the latter is activated for the duration of the overvoltage that is present.

16. Dimmer according to one of Claims 10 to 15, characterized in that the control circuit (SS) cooperates with a converter (UF) which, given the use of a potentiometer (PO) as operating element, converts a charging time of a second capacitor (C2), which charging time depends on the position of the potentiometer (PO), into a signal which the control circuit (SS) converts into a counter reading which determines the angle of flow.

17. Dimmer according to one of Claims 10 to 16, characterized in that the control circuit (SS) cooperates with a converter (UF) which, given the use of a pushbutton switch (TA) as operating element, generates, during the on state, an information item for the logic unit (LE) which sets a corresponding counter reading and the associated angle of flow.

18. Dimmer according to one of Claims 10 to 17, characterized in that a third capacitor (C3) is provided which acts via the limiting unit (BE) on the signal arriving from the driver (TR), in such a way that the switching edges of the load current do not produce any impermissible radio interference voltages.

19. Dimmer according to one of Claims 10 to 18, characterized in that a low-voltage CMOS section which essentially comprises the control circuit (SS) and further functional units (ZB;UF;TÜ;SÜ;TR) is integrated together with the switching element (SG), which is designed as a VDMOS power transistor, on a common chip (CP) and the low-voltage section is insulated from the drain of the power transistor by a buried oxide layer having a thickness of approximately 0.3 µm.

## Revendications

1. Procédé pour faire varier électroniquement la puissance de charges (BL), notamment de dispositifs d'éclairage, à l'aide d'un élément de commutation (SG) placé dans le circuit de la charge et commandé par un circuit de commande (SS) selon le principe de la commande d'amorçage ou de la commande de blocage et dont la durée de conduction de la tension alternative alimentant la charge (BL) au cours d'une période, après sélection à l'aide d'un organe de sélection (PO, TA), est déterminée par le circuit de commande (SS) sous la forme d'un angle de conduction variable, le circuit de commande (SS) en prenant en compte, lors de la fixation de l'angle de conduction, en plus de la valeur affichée à l'aide de l'organe de sélection (PO, TA) des valeurs supplémentaires déterminées de manière automatique de telle sorte que ledit circuit règle, au moins pendant une période de transition, des angles de conduction qui diffèrent de manière ciblée des valeurs affichées à l'aide de l'organe de sélection (PO, TA), caractérisé par le fait que le circuit de commande (SS) détecte des sous-tensions dans son alimentation et règle l'angle de conduction jusqu'à atteindre par une augmentation adaptée de l'alternance résiduelle, de nouveau une tension suffisante, puis augmente de nouveau graduellement l'angle de conduction et par le fait que le circuit de commande (SS), pour la détermination de l'angle de conduction, travaille avec une hystérésis telle que les variations de l'angle de conduction doivent dépasser une valeur minimale pour être prises en compte par le circuit de commande (SS).

2. Procédé selon la revendication 1, caractérisé par le fait que le circuit de commande (SS) à partir de l'instant de la mise en circuit de la charge (BL) augmente l'angle de conduction depuis zéro ou depuis une faible valeur, avec une vitesse de variation prédéterminée, jusqu'à ce que la valeur affichée à l'aide de l'organe de sélection (PO, TA) soit atteinte.

3. Procédé selon la revendication 1 ou 2, caractérisé par le fait que le circuit de commande (SS) stocke, en tant que contenu de mémoire, le dernier angle de conduction réglé et, après une mise hors circuit de la charge (BL) ou après une défaillance de courte durée du réseau, rétablit cet angle de conduction.

4. Procédé selon l'une des revendications précédentes, caractérisé par le fait que le circuit de commande (SS) mesure la température de l'élément de commutation (SG) et, en cas de température anormalement élevée, commute celui-ci à l'état passant et réduit ainsi dans un premier temps l'angle de conduction, puis règle l'angle de conduction lors de la demi alternance suivante de manière à obtenir une plage de température admissible.

5. Procédé selon l'une des revendications précédentes, caractérisé par le fait que l'élément de commutation (SG), en cas de surintensité non admissible, commute immédiatement à l'état bloquant pour le reste de la demi-alternance du réseau.

6. Procédé selon la revendication 1, caractérisé par le fait que le circuit de commande (SS), lorsque la tension d'alimentation est inférieure à une valeur minimale, règle l'angle de conduction à zéro et ouvre ainsi le circuit de la charge et ne referme celui-ci que lorsque ladite tension est supérieure à une valeur seuil prédéterminée.

7. Procédé selon l'une des revendications précédentes, caractérisé par le fait que circuit de commande (SS), en présence d'une surtension aux bornes de l'élément de commutation (SG), commute à l'état passant ledit élément de commutation (SG) pour la durée de la surtension et augmente ainsi globalement l'angle de conduction

8. Procédé selon l'une des revendications précédentes, caractérisé par le fait que, pour la prédétermination de l'angle de conduction à l'aide de l'organe de sélection (PO, TA), le circuit de commande peut discerner un organe de sélection analogique (PO), notamment un potentiomètre, et un organe de sélection numérique (TA), notamment un clavier.

9. Procédé selon l'une des revendications précédentes, caractérisé par le fait que le circuit de commande (SS) limite la pente des flancs de l'impulsion de commande nécessaire pour la commande de l'élément de commutation (SG).

10. Gradateur pour la mise en oeuvre du procédé selon l'une des revendications précédentes, avec un élément de commutation (SG), de préférence un transistor de puissance VDMOS, placé en série avec la charge (BL), avec un circuit de commande (SS) qui commande l'élément de commutation (SG), avec une alimentation en courant (POR) de type "Power on reset", avec un détecteur (ND) de passage par zéro pour la synchronisation des impulsions de commande du circuit de commande (SS), avecun organe de sélection (PO, TA) pour la sélection d'un angle de conduction qui fixe le réglage du gradateur, avec une unité logique (LE) associée au circuit de commande (SS) qui est programmée de telle sorte qu'elle détecte automatiquement des paramètres de fonctionnement qui ne sont pas prédéterminés par l'organe de sélection (PO, TA) et qu'après exploitation de ceux-ci, elle modifie en conséquence, au moins temporairement, l'angle de conduction prédéterminé et avec une unité de mémoire (ME) qui est également associée au circuit de commande (SS) pour mémoriser, en tant que contenu de mémoire, le dernier angle de conduction réglé à l'aide de l'organe de sélection (PO, TA), caractérisé par le fait que l'unité logique (LE) est pourvue d'une logique relation qui surveille la baisse de la tension d'alimentation et qui lors dune chute en-dessous d'une première valeur seuil, diminue l'angle de conduction par rapport à une position de compteur jusqu'à ce que la tension d'alimentation revienne dans une plage adaptée pour l'élément de commutation (SG) et par le fait que le circuit de commande (SS) est conçu de telle sorte que des modifications d'angle de conduction à chaque manoeuvre ne deviennent effectives que si la position correspondante du compteur varie d'au moins deux degrés.

11. Gradateur selon la revendication 11, caractérisé par le fait que que l'unité logique (LE) est programmée de telle sorte qu'en-dessous d'une seconde valeur seuil plus faible de la tension d'alimentation elle déclenche une réinitialisation par laquelle toutes les données actuelles sont effacées, ce qui signifie que la position du compteur correspond à celle d'un gradateur coupé et que la valeur de la mémoire est réglée sur l'intensité lumineuse maximale.

12. Gradateur selon l'une des revendications 10 ou 11, caractérisé par le fait que le circuit de commande (SS) comprend une unité de démarrage progressif (SE) qui coopère avec un compteur de l'unité logique (LE) de telle sorte que cette dernière augmente sa position de compteur de manière progressive de demi-alternance du réseau en demi-alternance du réseau jusqu'à l'obtention d'un angle de conduction réglé à l'aide de l'organe de sélection (PO, TA) ou déterminé par d'autres paramètres du circuit de commande (SS).

13. Gradateur selon l'une des revendications 10 à 12, caractérisé par le fait que le circuit de commande (SS) coopère avec un dispositif de surveillance de température (TÜ) qui mesure la température de la plaquette (CP) portant l'élément de commutation (SG) et transmet celle-ci au dispositif de commande (SS) qui de son côté règle l'angle de conduction en fonction de la position du compteur de telle sorte que la température de la plaquette (CP) reste dans la plage admissible.

14. Gradateur selon l'une des revendications 10 à 13, caractérisé par le fait que le circuit de commande (SS) coopère avec un dispositif de surveillance de courant (SÜ) qui détecte une baisse de tension proportionnelle au courant de charge (SG) et transmet celle-ci au circuit de commande (SS) qui de son côté dans le cas d'un courant de charge non admissible coupe l'excitation de l'élément de commutation (SG) par l'intermédiaire d'un circuit d'attaque (TR) et empêche une nouvelle excitation au moins jusqu'au passage par zéro suivant de la tension alternative.

15. Gradateur selon l'une des revendications 10 à 14, caractérisé par le fait qu'une surtension aux bornes de l'élément de commutation (SG) produit par le biais d'un élément (ZD) limiteur de tension un signal qui agit par l'intermédiaire d'un module de limitation (BE) sur l'élément de commutation (SG) de telle sorte que celui-ci devienne passant pour la durée de la surtension.

16. Gradateur selon l'une des revendications 10 à 15, caractérisé par le fait que le circuit de commande (SS) coopère avec un convertisseur (UF) qui, lorsqu'on utilise un potentiomètre (PO) comme organe de sélection, convertit un temps de chargement, dépendant de la position du potentiomètre (PO), d'un second condensateur (C2) en un signal qui est converti par le circuit de commande (SS) en une position de compteur déterminant l'angle de conduction.

17. Gradateur selon l'une des revendications 10 à 16, caractérisé par le fait que le circuit de commande (SS) coopère avec un convertisseur (UF) qui, lorsqu'on utilise un clavier (TA) comme organe de sélection, produit pendant l'état passant une information pour une unité logique (LE) qui règle une position de compteur correspondante et un angle de conduction correspondant.

18. Gradateur selon l'une des revendications 10 à 17, caractérisé par le fait qu'un troisième condensateur (C3) est prévu, lequel condensateur agit à travers le module limiteur (BE) sur le signal venant du circuit d'attaque (TR) de telle sorte que les flancs de commutation du courant de charge ne génèrent pas de parasites radio non admissibles.

19. Gradateur selon l'une des revendications 10 à 18, caractérisé par le fait qu'un module basse tension de type CMOS comprenant essentiellement le circuit de commande (SS) et d'autre unités fonctionnelles (ZB; UF; TÜ; SÜ; TR) est intégré avec l'élément de commutation (SG) qui se présente sous la forme d'un transistor de puissance VDMOS sur une plaquette (CP) commune et que le module basse tension est isolé du drain du transistor de puissance par une couche d'oxyde encastrée d'environ 0,3 µm.
